# EUROPÄISCHE PATENTSCHRIFT

(11) **EP 1 451 806 B1**
(45) Veröffentlichungstag und Bekanntmachung des Hinweises auf die Patenterteilung: **31.08.2005**
(21) Anmeldenummer: 02798260.2
(22) Anmeldetag: 05.12.2002
(51) Int. Cl.: G10L 15/00

(54) **SPRACHGESTEUERTE HAUS-KOMMUNIKATIONSANLAGE**
TERMINAL CONTROL
COMMANDE DE TERMINAUX

(30) Priorität: 06.12.2001 DE 10159850
(43) Veröffentlichungstag der Anmeldung: 01.09.2004
(73) Patentinhaber: SIEMENS AKTIENGESELLSCHAFT, 80333 München (DE)
(72) Erfinder: DUFFY, Kevin, 95032 Los Gatos (CN); HORNER, Robert, 81377 München (DE); SCHALLER, Nikolaus, 82041 Deisenhofen (DE); MESSER, Tilo, Holzkirchen 83607 (DE); ARETZ, Kurt, 46419 Isselburg (DE); TROKS, Werner, 49549 Ladbergen (DE); KERN, Ralf, 46399 Bocholt (DE); GRÖTING, Wolfgang, 46149 Oberhausen (DE)
(86) Internationale Anmeldenummer: PCT/DE2002/004466
(87) Internationale Veröffentlichungsnummer: WO 2003/050798

(56) Entgegenhaltungen:
- EP-A- 0 911 808
- EP-A- 1 154 406
- WO-A-01/15518
- WO-A-99/03254
- US-A- 5 987 416

## Beschreibung

Die Erfindung betrifft eine Vorrichtung zur Bedienung von elektronischen Endgeräten nach dem Oberbegriff des Anspruchs 1 und ein Verfahren zur Bedienung von Endgeräten nach Anspruch 8.

Es ist bekannt, beispielsweise eine Telekommunikationsanlage oder ein Autoradio mittels einer Freisprecheinrichtung zu nutzen, d. h., dass etwa ein Telefongespräch über die Freisprecheinrichtung, die ein Eingabemikrofon und einen Lautsprecher umfasst, geführt wird. Auch ist es bekannt, eine Spracheingabe zur Funktionssteuerung einer Telekommunikationsanlage zu nutzen, etwa Beginn und Ende eines Gesprächs oder einen Wählvorgang über eine Spracheingabe zu realisieren. Dabei ist der Benutzer an die Lage des Eingabemikrofons gebunden, was seine Bewegungsfreiheit einengt.

Aus der EP 1 154 406 A1 ist ein System bekannt, welches die Steuerung von sich in einem Haus befindenden gleichartigen elektrischen Geräten ermöglicht, wobei hierzu eine zentrale Servereinrichtung vorgesehen ist, die neben einer Steuerungsfunktion eine Schnittstelle zu einem Telekommunikationsnetz darstellt.

Der Erfindung liegt das Problem zugrunde, die Bewegungsfreiheit eines Benutzers einer Telekommunikationsanlage und/oder anderer elektronischer Endgeräte zu erhöhen.

Die Erfindung löst dieses Problem durch eine Vorrichtung mit den Merkmalen des Anspruchs 1 und durch ein Verfahren zur Bedienung von Endgeräten mit den Merkmalen des Anspruchs 8, das nach Einlesen in den Speicher eines
Computers hardwareseitige Funktionen der Ansteuerung verschiedener Geräte bewirken kann. Die Merkmale der genannten Ansprüche können einzeln oder besonders vorteilhaft in Kombination miteinander verwirklicht sein. Hinsichtlich vorteilhafter Ausgestaltungen wird auf die Ansprüche 2 bis 7 verwiesen.

Mit der Erfindung ist es möglich, sowohl Gespräche von mehreren Orten aus zu führen als auch eine Sprachsteuerung für elektronische Endgeräte, etwa eine HiFi-Anlage, eine Telekommunikationsanlage oder ähnliches, von verschiedenen Orten vorzunehmen. Dabei kann etwa ein Eingabemittel in jedem Raum einer Wohnung vorhanden sein, so dass von der gesamten Wohnung aus Telefonate geführt werden können, unabhängig von der Lage etwa eines oder mehrerer Telefone der Telekommunikationsanlage.

Bei Anordnung mehrerer Eingabegeräte verschiedener Art, die über eine Busleitung funktional verbunden sind, kann etwa bei Annahme eines Telefongesprächs automatisch gleichzeitig das Radio oder eine HiFi-Anlage in eine Stummschaltung versetzt werden. Über einen ebenfalls mittels Sprachsteuerung ansteuerbares Telekommunikationsinterface, das etwa mit einem Computer zusammenwirkt, kann beispielsweise ein Musiktitel aus dem Internet angefordert werden, der dann über verschiedene Ausgabemittel in die ganze Wohnung oder selektiv nur in den Raum, in dem sich der fragliche Benutzer aufhält, übertragbar ist. Die Ausgabemittel sind vorzugsweise sowohl für Telefonate als auch beispielsweise für Musikempfang nutzbar, und daher in HiFi-Qualität vorgesehen.

Wenn besonders vorteilhaft eine Spracherkennung vorgesehen ist, die auf den Benutzer nach Aufbau einer Verbindung eingestellt bleibt, kann dieser sich während eines Telefonats in der ganzen Wohnung frei bewegen. Es ist nur das jeweilige Eingabemittel freigeschaltet, in dessen Nähe sich der Benutzer befindet. In anderen Räumen befindliche Personen können sich dann unterhalten, ohne dass die Gefahr einer Störung der Verbindung bestünde. Auch eventuell von anderen Personen abgegebene Steuersignale sind dann nicht wirksam, da die Spracherkennung auf den das Gespräch annehmenden Benutzer fixiert bleibt. Zur Steuerung dieser Funktionen ist eine Software vorgesehen, die auf einem ebenfalls an die Busleitung angeschlossenen Computer installiert ist und die sowohl die Sprecherverifikation eines Benutzers als auch die Nachführung der Ansteuerung der Ausgabemittel an die Bewegung des Benutzers durchführt. Auch das Zusammenwirken mehrerer Geräte, wie etwa der Telekommunikationsanlage und der HiFi-Anlage, ist über diese Software gesteuert. Weitere Funktionen, etwa eine Lichtsteuerung oder ein auf Sprachbefehle reagierendes Bewegen von Jalousien, können ebenfalls implementiert sein.

Wenn die Lautsprecherfreischaltung nach Aufbau eines Telefongesprächs auf das jeweils aktive Eingabemittel beschränkt ist, kann der Benutzer beispielsweise in ein anderes Zimmer gehen, während Gäste, die mit dem Benutzer ursprünglich in einem Zimmer zusammengesessen haben, dort verbleiben können, ohne das Gespräch mithören zu können.

Weitere Vorteile und Merkmale ergeben sich aus einem nachfolgend beschriebenen und in der Zeichnung dargestellten Ausführungsbeispiel des Gegenstandes der Erfindung.

### In der Zeichnung zeigt:

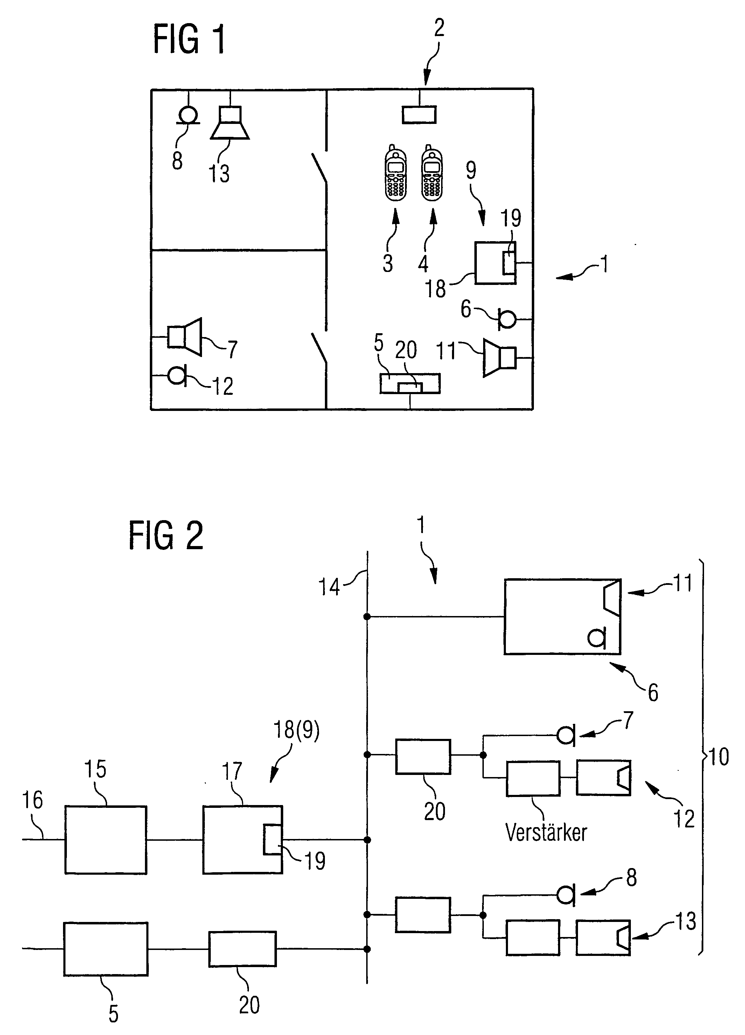

- Fig. 1: eine schematische Überblicksdarstellung einer erfindungsgemäßen Vorrichtung mit einer Telekommunikationsanlage und einer HiFi-Anlage, installiert in einer Wohnung,
- Fig. 2: eine schematische Darstellung einer beispielhaften Verschaltung der Vorrichtung nach Fig. 1.

Die Vorrichtung 1 des Ausführungsbeispiels umfasst eine Telekommunikationsanlage 2 mit mehreren Telefonen 3, 4, die sowohl als Festnetz- als auch als Mobilgeräte ausgebildet sein können. Auch eine Telekommunikationsanlage 2 mit nur einem Telefon 3 ist möglich. Anstelle von reinen Telefonen 3, 4 können selbstverständlich auch Telekommunikationsgeräte, die beliebige Datenübertragung, beispielsweise die Übertragung von Texten oder stehenden oder bewegten Bildern - mit und ohne Ton -, ermöglichen, verwendet werden. Neben der Telekommunikationsanlage 2 ist eine HiFi-Anlage 5 als weiteres Endgerät vorgesehen, die einen herkömmlichen Receiver enthalten kann. Auch weitere Endgeräte, etwa auch Küchengeräte, Licht- oder Jalousiesteuerungen o. ä., können vorgesehen sein.

Die Vorrichtung 1 verfügt über mehrere Eingabemittel 6, 7, 8, die zusammen mit einer Auswerteeinheit 9, die insbesondere eine Spracherkennung und eine Sprecherverifikation ermöglicht, eine Eingabevorrichtung 10 bilden. Die Eingabemittel 6, 7, 8 umfassen jeweils zumindest ein Mikrofon zur Aufnahme der Sprachbefehle. Bei größeren Räumen können in einem Raum auch mehrere Mikrofone angeordnet sein. Die Auswerteeinheit 9 kann dezentral den jeweiligen Eingabemitteln 6, 7,8 zugeordnet oder in einer zentralen Einheit, etwa einem Computer 18, wie gezeigt, angeordnet sein. Die Auswerteeinheit 9 kann hierzu als Software auf dem Computer 18 implementiert sein und die Sprecherverifikation, also das Erkennen eines jeweiligen Benutzers, vornehmen. Zudem wertet sie die gegebenen Sprachbefehle aus, um dadurch die Endgeräte 3, 4, 5, 18 anzusteuern, etwa die HiFi-Anlage 5 per Sprachbefehl einzuschalten oder eine Telefonverbindung herzustellen. Zusätzlich wird vom Programm der Auswerteeinheit die Verwaltung verschiedener Benutzer vorgenommen, derart, dass mehrere Benutzer mit konkurrierenden Wünschen den Ablauf nicht stören können. Ein Beispiel hierzu ist unten näher erläutert.

Jedem Raum, in dem die Vorrichtung 1 nutzbar sein soll, kann zusätzlich zumindest ein Ausgabemittel 11, 12, 13, etwa als HiFi-tauglicher Lautsprechersatz ausgebildet, zugeordnet sein.

Die Eingabemittel 6, 7, 8 können in nahezu beliebiger Anzahl vorhanden sein. In jedem Fall können sie von den Telekommunikationsgeräten 3, 4 sowie der HiFi-Anlage 5 oder weiteren Endgeräten, die vorgesehen sein können, entfernt liegen. Etwa die Lage eines Mobiltelefons braucht mit der Erfindung nicht mehr beachtet zu werden, wenn auf einen eingehenden Anruf ein Gespräch aufgebaut werden soll. Suchvorgänge nach einem klingelnden Mobiltelefon, in deren Verlauf der Anrufer schließlich seinen Verbindungswunsch aufgibt, da er annimmt, dass der Angerufene nicht zu erreichen sei, sind damit entbehrlich. Der Anruf kann vom Empfangsbereich jedes Eingabemittels 6, 7, 8 mittels eines entsprechenden Sprachbefehls, der von der Software der Auswerteeinheit 9 verarbeitet wird und die Verbindung herstellt, angenommen werden.

Neben den Eingabemitteln 6, 7, 8 sind die oben erwähnten Lautsprecher 11, 12, 13 vorgesehen. Auch andere Ausgabemittel für empfangene Daten, etwa Bildschirme, kommen alternativ oder zusätzlich in Betracht. Damit stehen unabhängig von der Lage des jeweiligen Telekommunikationsgeräts 3, 4 oder anderen Endgeräts 5 in jedem Raum der hier gezeigten Wohnung oder des Büros alle Mittel zur Verfügung, um eine Telekommunikationsverbindung über Sprachsteuerung eingehen zu können oder andere elektronische Endgeräte steuern zu können.

Die Datenübertragung in dem Netzwerk zwischen den einzelnen Eingabemitteln 6, 7, 8 und Lautsprechern 11, 12, 13 sowie dem oder den Telekommunikationsgerät(en) oder sonstigen Endgeräten 3, 4, 5, 18 wird beispielsweise über eine Funkverbindung, etwa im üblichen DECT-GAP-Mobilfunkstandard, aufgebaut. Auch eine Festverdrahtung ist möglich. Wenn diese eine ohnehin vorhandene Versorgungsleitung (power line) für elektrische Energie nutzt, etwa einen Teil eines Niederspannungsnetzes, müssen keine neuen Kabel verlegt werden. Die nachträgliche Installation einer derartigen Vorrichtung 1 ist dann sehr kostengünstig und durch einfaches Einstecken der Anschlüsse von Komponenten in die Steckdosen durchzuführen.

Im vorliegenden Ausführungsbeispiel ist eine Niederspannungsleitung 14 als Busleitung zur internen Datenübertragung genutzt. Daran sind alle Endgeräte 3, 4, 5, 18 angeschlossen, ebenso die Eingabemittel 6, 7, 8 und die Ausgabemittel 11, 12, 13. Die Busleitung 14 ist über ein Telekommunikationsinterface (Home Gateway) 15 an eine externe Datenverbindung 16 angeschlossen. Diese Datenverbindung 16 kann durch eine Festverbindung, etwa ein übliches Telefon- oder TV-Kabel, gebildet sein. Ebenso kommt eine Funkverbindung, etwa über Satellitenübertragung, in Betracht. Die Übertragungsstandards sind je nach zur Verfügung stehendem Stand der Technik und unter Kosten-Nutzen-Gesichtspunkten auswählbar. Beispielsweise kann eine schnelle DSL-Übertragung bei Anschluss an das Internet gewünscht sein, wenn ein ISDN-Anschluss nicht die erhoffte Geschwindigkeit ermöglicht.

Über den home gateway 15 können Dienste in Anspruch genommen werden, etwa können Musiktitel bestellt werden (music on demand), die dann über die Lautsprechersätze 11, 12, 13 gehört werden können. Diese können hierfür als Aktivlautsprecher mit eigenen Verstärkern 22 ausgebildet sein. Auch e-mails sind über den home gateway 15 vermittelbar. Diese können auf Wunsch über einen oder mehrere Lautsprecher 11, 12, 13 vorgelesen werden. Ebenso sind Fernabfragen des Anrufbeantworters, Übermittlung der Steuerung von Küchengeräten, Fernsteuerung von Licht und etliche andere Dienste hierüber vermittelbar.

An den als Telekommunikationsinterface arbeitenden home gateway 15 ist ein dauerhaft arbeitender Controller 17 (always on controller) angeschlossen, der als Bestandteil eines Computers 18, etwa eines Personal Computers, ausgebildet ist. Der Computer 18 ist mittels eines PLC-Modems 19 an die Busleitung 14, auf die von allen Räumen, in denen die Vorrichtung 1 nutzbar ist, zugegriffen werden kann, angeschlossen. Über den Computer 18 kann somit die Verbindung nach außen erreicht werden, zudem können auch die Eigenschaften des internen Netzes eingestellt werden, etwa die Lautstärke, Empfindlichkeit der Spracherkennung, Vornahme eines Lernprogramms zur Spracherkennung, Abstimmung der Funktionen untereinander usw.

Eine HiFi-Anlage 5 als Endgerät kann über einen Adapter 20 an die Busleitung 14 angeschlossen sein, wobei der Adapter 20 beispielsweise eine Digital-Analog-Wandlung derart vornimmt, dass HiFi-Anlagen 5 mit herkömmlichen Receivern verwendet werden können. Die HiFi-Anlage 5 kann an eine separate Empfangseinheit, beispielsweise eine Antenne, eine Satelliten- oder Kabelempfangseinheit, angeschlossen sein oder ihr Eingangssignal mit über die Busleitung 14 erhalten.

Die Sprachsteuerung ermöglicht eine Beeinflussung der HiFi-Anlage 5 von jedem Raum der Wohnung aus. So kann die Lautstärke sprachgesteuert geregelt werden, auch die Titelauswahl von Musikstücken. Sofern der Titel nicht auf einem Datenträger vorhanden ist, ist es je nach Einstellung in der Software möglich, dass er automatisch über eine Rückmeldung der HiFi-Anlage an den home gateway 15 im Internet beispielsweise als MP3-Datei bestellt wird. Der home gateway 15 ist dann mittelbar sprachgesteuert. Um Verwirrung der Sprachsteuerung zu vermeiden, kann ein Anmelde- und ein Abmeldesignal einer jeweils die Sprachsteuerung vornehmenden Person verlangt werden. Ebenso ist eine Auswahl von befugten Personen, etwa über Eingabe in die Software des Computers 18, möglich. Eine Hierarchie kann ebenfalls implementiert sein. Vorzugsweise enthält die Software ein Menü, in dem u. a. Optionen hinsichtlich der Verwaltung von Benutzern einstellbar sind.

Auch andere Hausgeräte sind dann über die Vorrichtung 1 von jedem Raum in ähnlicher Weise per Sprachsteuerung steuerbar. Daten aus dem Internet können über einen oder mehrere Lautsprecher 11, 12, 13 an berechtigte Benutzer übertragen werden.

Wenn etwa ein Anrufwunsch von außen über den home gateway 15 bei der Vorrichtung 1, die die Telekommunikationsanlage 2 umfasst, eingeht, wird ein entsprechendes Klingelsignal von allen Lautsprechern 11, 12, 13 übertragen. Die Vorrichtung 1 kann auch den Anrufer ansagen, sofern dieser ein Identifizierungssignal herausgibt. Die Ansage ist insofern sinnvoll, als der Angerufene nicht das Telefon 3, 4 im Blick haben muss, also das Display eines solchen Geräts nicht in jedem Fall wahrnehmen kann. Sobald im Empfangsbereich eines Eingabemittels 6, 7, 8 das Gespräch angenommen wird, wird nur der jeweils diesem Eingabemittel 6, 7, 8 zugeordnete Lautsprecher 11, 12, 13 weiterhin aktiviert, die anderen werden stummgeschaltet. Anhand der Stimme derjenigen Person, die das Telefonat annimmt, wird eine Sprecherverifikation von der Eingabevorrichtung 10 vorgenommen. Sobald sich die betreffende Person von dem Eingabemittel (beispielsweise Mikrofon 6) wegbewegt und etwa in den Raum wechselt, in dem sich das Mikrofon 7 befindet, wird der diesem zugeordnete Lautsprecher 12 aktiviert, der bisher aktive Lautsprecher 11 wird stummgeschaltet. In gleicher Weise können auch andere Ausgabemittel dem Benutzer nachgeführt werden, etwa Bildschirmanzeigen (z. B. für die Rufnummer des Anrufers oder dessen Bild bei Bildtelefonen) oder auch Lautsprecher der HiFi-Anlage 5. Bei Ausgabe eines Klingelsignals kann eventuell laufende Musik automatisch leise oder ausgeschaltet werden, um das Telefonat nicht zu stören. Nach Annahme des Gesprächs (beispielsweise über das Eingabemittel 6) kann über die Lautsprecher 12, 13 die Musik weiterlaufen und nur in dem Raum, in dem das Gespräch geführt wird, die Stummschaltung weiterbestehen. Derartige Wünsche sind ebenfalls über die Programmsteuerung im Computer 18 einstellbar. Beispielsweise ist auch möglich, dass nach Annahme eines Telefongesprächs die HiFi-Anlage 5 automatisch zur Steuerung durch einen anderen Benutzer freigegeben ist, der dann die Musik in seinen Aufenthaltsraum schaltet.

Anstelle oder zusätzlich zu einem Mikrofon als Eingabemittel 6, 7, 8 kann auch ein Raumüberwachungssystem (etwa mit Bewegungsmelder) Verwendung finden, jedenfalls solange, wie sich nur eine Person im Empfangskreis der Anlage befindet oder alle Personen sich im selben Raum aufhalten. Ebenso ist es möglich, ein Raumüberwachungssystem dahingehend zu installieren, dass die Eingabemittel 6, 7, 8 generell auf Geräusche oder Bewegungen reagieren und bei unbefugtem Betreten der Wohnung beispielsweise automatisch die Polizei anrufen oder eine Alarmsirene aktivieren.

Durch die oben genannte Nachführung der Ansteuerung der Lautsprecher 11, 12, 13 nach dem jeweils aktiven Benutzer ist die volle Bewegungsfreiheit der kommunizierenden Person durch alle an die Vorrichtung 1 angeschlossenen Räume gewährleistet. Andere Personen, die sich in einem anderen Raum befinden, werden nicht gestört und können beispielsweise ein Telefongespräch auch nicht verfolgen.

Der Anschluss weiterer Räume kann einfach dadurch geschehen, dass bei Verwendung einer vorhandenen Leitung, beispielsweise einer Niederspannungsleitung oder einer vorhandenen Telefonleitung, einem Fernsehkabel oder dergleichen 14 als Busleitung eine Kombination aus Lautsprecher und Mikrofon über eine freie Steckdose des Raumes angeschlossen wird.

Eine derartige Kombination aus Lautsprecher und Mikrofon kann als Kompaktgerät in einem kleinem, handlichem Gehäuse angeboten werden. Dadurch ist auch eine unauffällige Installation derartiger Geräte möglich. Alle Lautsprecher 11, 12, 13 und Mikrofone 6, 7, 8 sind über ein jeweiliges Modem und die Busleitung 14 mit dem Computer 18 verbunden und von diesem ansteuerbar.

Die Vorrichtung 1 kann von mehreren Personen gleichzeitig benutzt werden, die sich beispielsweise bei der Software jeweils über ein Passwort per Spracheingabe anmelden und dann berechtigt sind, etwa eine Hi-Fi-Anlage 5 oder die Telekommunikationsanlage 2 fernzubedienen oder Daten aus dem Internet zu empfangen. Eine Vorzugsschaltung kann vorgesehen sein, die jeweils einen Raum, in dem sich bereits ein momentan aktiver berechtigter Benutzer aufhält, von der Einwirkung einer weiteren Person auf die Vorrichtung 1 innerhalb dieses Raumes ausschließt. Dann kann verhindert werden, dass etwa eine zweite Person in einem Raum, in dem ein Benutzer telefoniert, laut Musik hört.

Insgesamt ist damit mit der Vorrichtung 1 sowohl eine freihändige Telefonie als auch Musikverteilung innerhalb eines Büros oder einer Wohnung möglich. Die Bedienung der Vorrichtung 1 erfolgt vollständig freihändig über Sprachsteuerung, was beispielsweise auch eine Nutzung von einer Küche aus vorteilhaft erscheinen lässt. Die Installation weiterer Lautsprecher oder Mikrofone oder anderer Ein- oder Ausgabemittel gestaltet sich durch kompakte Einheiten besonders einfach. Insbesondere bei Funkübertragung oder bei Nutzung einer vorhandenen Niederspannungsleitung zur Datenübertragung ist der Aufwand zur Installation weiterer Räume an die Vorrichtung 1 minimiert. Die Vorrichtung 1 kann somit auch im Nachhinein erweitert werden. Ein neuer Raum mit dem entsprechenden Eingabe- und Ausgabemittel, die zusammen als handelbare Einheit verkauft werden können, wird an der Software des Computers 18 angemeldet und erhält damit die gleichen Funktionen wie die bereits installierten Eingabemittel 6, 7, 8 und Ausgabemittel 11, 12 und 13.

## Patentansprüche

1. Vorrichtung (1) mit zumindest einem elektronischen Endgerät (3;4;5;18), insbesondere einer HiFi-Anlage (5), einem Personal Computer (18) oder dergleichen, wobei die Vorrichtung zumindest ein Telekommunikationsgerät enthält und wobei das oder die Endgerät(e) (3;4;5;18) mittels einer über eine Eingabevorrichtung (10) wirkenden Sprachsteuerung bedienbar ist oder sind, **dadurch gekennzeichnet, dass**
a) die Eingabevorrichtung (10) vom Endgerät (3;4;5;18) getrennt ist und mehrere Eingabemittel (6;7;8) und mehrere Ausgabemittel (11;12;13) umfasst,
b) die Vorrichtung (1) mehrere Typen von Endgeräten, etwa eine Telekommunikationsanlage (2) und eine HiFi-Anlage (5), miteinander über eine Busleitung (14) funktional verbindet,
c) die Eingabemittel (6;7;8) miteinander in einer eine Übergabe der Bedienung zwischen verschiedenen Eingabemitteln (6;7;8) ermöglichenden Netzschaltung verbunden sind,
d) die Eingabevorrichtung (10) eine ein Handover zwischen den Eingabemitteln (4;5;6) anstoßende Sprecherverifikation umfasst,
e)nach Beginn eines Telefongesprächs über eine Verbindung eine Spracherkennung auf einen das Gespräch annehmenden Benutzer fixiert bleibt und die Ansteuerung der Ausgabemittel (11;12;13) der Bewegung des Benutzers nachgeführt wird.

2. Vorrichtung nach Anspruch 1, **dadurch gekennzeichnet, dass** die Eingabemittel (6;7;8) miteinander vernetzte Mikrofone umfassen.

3. Vorrichtung nach einem der Ansprüche 1 bis 2,
**dadurch gekennzeichnet, dass** die Eingabemittel (6;7;8) und/oder die Ausgabemittel (11;12;13) über eine kabellose Verbindung, insbesondere eine Infrarot- oder Funkverbindung, miteinander vernetzt sind.

4. Vorrichtung nach einem der Ansprüche 1 bis 3,
**dadurch gekennzeichnet, dass** die Eingabemittel (6;7;8) und/oder die Ausgabemittel (11;12;13) über das elektrische Niederspannungsnetz oder Telefon- oder Fernsehkabel miteinander verbunden sind.

5. Vorrichtung nach einem der Ansprüche 1 bis 4,
**dadurch gekennzeichnet, dass** jedem Eingabemittel (6;7;8) zumindest ein Ausgabemittel (11;12;13) für empfangene Daten, insbesondere ein Lautsprecher, zugeordnet ist, von denen nur der oder die im Bereich des jeweils aktiven Eingabemittels (6;7;8) befindlichen Ausgabemittel (11;12;13) freigeschaltet ist oder sind.

6. Vorrichtung nach Anspruch 1, **gekennzeichnet durch** zumindest eine zentrale Schnittstelle (home gateway) (15) der Vorrichtung (1) zu einer externen Datenverbindung (16), insbesondere zu einer Datenverbindung (16) mit einem Telefonnetz, dem Internet und/oder Radio- oder Fernsehsendern.

7. Vorrichtung nach einem der Ansprüche 1 bis 6,
**dadurch gekennzeichnet, dass** die Vorrichtung (1) einen Adapter (20) zum Anschluss einer herkömmlichen HiFi-Anlage (5) an die Busleitung (14) aufweist.

8. Verfahren zur Bedienung von Endgeräten durch eine Datenverarbeitungs- und/oder Kommunikationseinrichtung, insbesondere Computer, mit folgenden Schritten:
- Übersenden eines Klingelsignals an mehrere Ausgabemittel (11;12;13),
- Erfassung eines Antwortsprachsignals über ein Eingabemittel (6;7;8),
- Herstellung einer Telefonverbindung,
- Schaltung der weiteren empfangenen Signale an ein demjenigen Eingabemittel (6;7;8), von dem das Antwortsprachsignal empfangen wurde, zugeordnetes Ausgabemittel (11;12;13),
- Vornahme einer Sprecherverifikation,
- nach Beginn eines Telefongesprächs über die Telefonverbindung bleibt eine Spracherkennung auf einen das Gespräch annehmenden Benutzer fixiert und es wird die Ansteuerung der Ausgabemittel (11;12;13) der Bewegung des Benutzers nachgeführt.

## Claims

1. Device (1) with at least one electronic terminal
(3;4;5;18), in particular a hi-fi system (5), a personal computer (18) or the like, the device having at least one telecommunication device and the terminal(s) (3;4;5;18) being capable of being operated by voice control which affects an input device (10), **characterised in that**
a) the input device (10) is separate from the terminal (3;4;5;18) and includes a plurality of input means (6;7;8) and a plurality of output means (11;12;13),
b) the device (1) functionally connects together a plurality of types of terminals, such as a telecommunication system
(2) and a hi-fi system (5), over a bus line (14),
c) the input means (6;7;8) are interconnected in a network enabling operation to be handed over between different input means (6;7;8),
d) the input device (10) includes verification of the person speaking to enable a handover between the input means (4;5;6),
e) once a telephone call has begun over a connection, voice recognition remains locked onto a user taking the call and the control of the output means (11;12;13) tracks the movement of the user.

2. Device according to claim 1, **characterised in that** the input means (6;7;8) include networked microphones.

3. Device according to one of the claims 1 to 2, **characterised in that** the input means (6;7;8) and/or the output means (11;12;13) are networked together over a wireless connection, in particular an infrared or radio connection.
- Establishing a telephone connection,
- Switching the further incoming signals to an output means (11;12;13) assigned to the input means (6;7;8) by which the spoken response signal was received,
- Carrying out verification of the person speaking,
- Once a telephone call has begun over the telephone connection, voice recognition remains locked onto a user taking the call and the control of the output means (11;12;13) tracks the movement of the user.

4. Device according to one of the claims 1 to 3, **characterised in that** the input means (6;7;8) and/or the output means (11;12;13) are interconnected over the electrical low-voltage network or the telephone cable or television cable.

5. Device according to one of the claims 1 to 4, **characterised in that** each input means (6;7;8) is assigned at least one output means (11;12;13) for incoming data, in particular a loudspeaker, by which only the output means (11;12;13) within range of the currently active input means (6;7;8) is or are enabled.

6. Device according to claim 1, **characterised by** at least one central interface (home gateway) (15) of the device (1) to an external data connection (16), in particular to a data connection (16) with a telephone network, the Internet and/or radio or television transmitters.

7. Device according to one of the claims 1 to 6, **characterised in that** the device (1) has an adapter (20) for connecting a conventional hi-fi system (5) to the bus line (14).

8. Method for operating terminals with the aid of a data processing and/or communication device, in particular a computer, said method having the following steps:
- Sending a ringing signal to a plurality of output means (11;12;13),
- Detecting a spoken response signal over an input means (6;7;8),
- Establishing a telephone connection,
- Switching the further incoming signals to an output means (11;12;13) assigned to the input means (6;7;8) by which the spoken response signal was received,
- Carrying out verification of the person speaking,
- Once a telephone call has begun over the telephone connection, voice recognition remains locked onto a user taking the call and the control of the output means (11;12;13) tracks the movement of the user.

## Revendications

1. Dispositif (1) comprenant au moins un terminal électronique (3 ; 4 ; 5 ; 18), en particulier une installation Hi-Fi (5), un ordinateur personnel (18) ou équivalent, ledit dispositif contenant au moins un appareil de télécommunication et ledit ou lesdits terminaux (3 ; 4 ; 5 ; 18) pouvant être commandé(s) au moyen d'une commande vocale fonctionnant à l'aide d'un dispositif d'entrée (10), **caractérisé en ce que**
a) le dispositif d'entrée (10) est séparé du terminal (3 ; 4 ; 5 ; 18) et comprend plusieurs moyens d'entrée (6 ; 7 ; 8) et plusieurs moyens de sortie (11 ; 12 ; 13),
b) le dispositif (1) relie fonctionnellement entre eux, par une ligne de bus (14), plusieurs types de terminaux, par exemple une installation de télécommunication (2) et une installation Hi-Fi (5),
c) les moyens d'entrée (6 ; 7 ; 8) sont reliés entre eux dans un circuit de réseau permettant un transfert de la commande entre différents moyens d'entrée (6 ; 7 ; 8),
d) le dispositif d'entrée (10) comprend une vérification du locuteur, déclenchant un transfert entre les moyens d'entrée (4 ; 5 ; 6),
e) après le début d'une communication téléphonique via une liaison, une reconnaissance vocale reste fixée sur un usager acceptant la communication et la commande des moyens de sortie (11 ; 12 ; 13) est asservie au mouvement de l'usager.

2. Dispositif selon la revendication 1, **caractérisé en ce que** les moyens d'entrée (6 ; 7 ; 8) comprennent des microphones reliés en réseau.

3. Dispositif selon l'une des revendications 1 à 2, **caractérisé en ce que** les moyens d'entrée (6 ; 7 ; 8) et/ou les moyens de sortie (11 ; 12 ; 13) sont reliés en réseau par une liaison sans câble, en particulier une liaison infrarouge ou radio.

4. Dispositif selon l'une des revendications 1 à 3, **caractérisé en ce que** les moyens d'entrée (6 ; 7 ; 8) et/ou les moyens de sortie (11 ; 12 ; 13) sont reliés entre eux par le réseau électrique basse tension ou des câbles de téléphone ou de télévision.

5. Dispositif selon l'une des revendications 1 à 4, **caractérisé en ce qu'**à chaque moyen d'entrée (6 ; 7 ; 8) est attribué au moins un moyen de sortie (11 ; 12 ; 13) pour des données reçues, en particulier un haut-parleur, parmi lesquels seul (s) le ou les moyens de sortie (11 ; 12 ; 13) situé(s) dans la zone du moyen d'entrée (6 ; 7 ; 8) respectivement actif est ou sont déconnecté(s).

6. Dispositif selon la revendication 1, **caractérisé par** au moins une interface centrale (home gateway) (15) du dispositif (1) vers une liaison de données externe (16), en particulier vers une liaison de données (16) avec un réseau téléphonique, l'Internet et/ou des émetteurs de radio ou de télévision.

7. Dispositif selon l'une des revendications 1 à 6, **caractérisé en ce que** le dispositif (1) comprend un adaptateur (20) pour le raccordement d'une installation Hi-Fi (5) classique à la ligne de bus (14).

8. Procédé de commande de terminaux par un dispositif de traitement de données et/ou de communication, en particulier un ordinateur, comprenant les étapes suivantes :
- envoyer un signal de sonnerie à plusieurs moyens de sortie (11 ; 12; 13),
- saisir un signal vocal de réponse à l'aide d'un moyen d'entrée (6 ; 7 ; 8),
- établir une communication téléphonique,
- transmettre les autres signaux reçus à un moyen de sortie (11 ; 12 ; 13) attribué à celui des moyens d'entrée (6 ; 7 ; 8) duquel a été reçu le signal vocal de réponse,
- procéder à une vérification du locuteur,
- après le début d'une communication téléphonique via une liaison téléphonique, une reconnaissance vocale reste fixée sur un usager acceptant la communication et la commande des moyens de sortie (11 ; 12 ; 13) est asservie au mouvement de l'usager.
